# EUROPÄISCHE PATENTSCHRIFT

(11) **EP 3 189 258 B1**
(45) Veröffentlichungstag und Bekanntmachung des Hinweises auf die Patenterteilung: **21.04.2021**
(21) Anmeldenummer: 15770808.2
(22) Anmeldetag: 01.09.2015
(51) Int. Cl.: F16K 37/00, F16K 31/00

(54) **VERFAHREN ZUR ERMITTLUNG DES VERSCHLEISSGRADES EINES VENTILS UND VORRICHTUNG ZUR DURCHFÜHRUNG DES VERFAHRENS**
METHOD FOR DETERMINING THE DEGREE OF WEAR OF A VALVE, AND APPARATUS FOR CARRYING OUT SAID METHOD
PROCÉDÉ DE DÉTERMINATION DU DEGRÉ D'USURE D'UNE SOUPAPE ET DISPOSITIF PERMETTANT DE METTRE EN OEUVRE LE PROCÉDÉ

(30) Priorität: 01.09.2014 DE 102014012688
(43) Veröffentlichungstag der Anmeldung: 12.07.2017
(60) Teilanmeldung: 19172708.0
(73) Patentinhaber: ACS Air Compressor Systeme GmbH, 83703 Gmund am Tegernsee (DE); Krapfl, Markus, 83134 Prutting (DE); Thiel, Stefan, 83022 Rosenheim (DE)
(72) Erfinder: ZAHLHAAS, Werner, 82110 Germering (DE); KRAPFL, Markus, 83134 Prutting (DE); THIEL, Stefan, 83022 Rosenheim (DE)
(74) Vertreter: Kilian Kilian & Partner
(86) Internationale Anmeldenummer: PCT/EP2015/025063
(87) Internationale Veröffentlichungsnummer: WO 2016/034292

(56) Entgegenhaltungen:
- WO-A1-2013/099386
- DE-A1-102011 077 901
- US-A1- 2003 125 841

## Beschreibung

Die Erfindung betrifft das Ermitteln eines voraussichtlichen oder bereits tatsächlich eingetretenen Verschleißgrades eines Ventils, beispielsweise eines Mehrwegeventils.

Innerhalb eines Mehrwegeventils befindet sich ein Kolben, der unterschiedliche Positionen einnehmen kann. Je nach Position des Kolbens ändert sich das Verhältnis wie das Medium durch das Mehrwegeventil fließt. Die Position des Kolbens wird temperaturabhängig verändert durch ein sogenanntes Dehnstoffarbeitselement das mechanisch mit dem Kolben verbunden ist.

Das Dehnstoffarbeitselement dehnt sich entsprechend einer Temperatur/Bewegungs- Kennlinie bei einer Temperaturerhöhung aus und zieht sich wieder zusammen, wenn die Temperatur sinkt.

Diese temperaturabhängigen Bewegungen führen zu einem Verschleiß. Innerhalb des Mehrwegventils ist das Dehnstoffarbeitselement das Element von dessen Verschleißgrad die Funktion des Ventils in besonderem Maße abhängt.

Die Hersteller von Mehrwegventilen der bekannten Art haben empirisch gewonnene Erfahrungswerte für die Betriebsbedingungen eines Mehrwegventils und leiten daraus ab, wie lange ein Dehnstoffarbeitselement in einem Mehrwegventil im Einsatz bleiben kann, bis die Verschleißgrenze des Dehnstoffarbeitselements wahrscheinlich erreicht ist.

Anhand der Einsatzdauer des Mehrwegventils in einem Kühlkreislauf wird angenommen, dass nach einer gewissen Einsatzdauer der Verschleiß des Dehnstoffarbeitselements mit einer gewissen Wahrscheinlichkeit so weit fortgeschritten ist, dass es im Sinne einer weiteren Betriebssicherheit des Mehrwegeventils und des Systems in dem sich das Mehrwegeventil befindet sinnvoll ist, beim Mehrwegeventil jene Komponente auszutauschen in der das Dehnstoffarbeitselement enthalten ist. Es existieren auch Mehrwegeventile, bei denen man das Dehnstoffarbeitselement einzeln austauschen kann.

Die bekannten Mehrwegventile haben einen abnehmbaren Deckel. Bei abgenommenem Deckel ist der Austausch der Verschleißteile auf relativ einfache und schnelle Art und Weise möglich.

Mehrwegventile mit einem Dehnstoffarbeitselement werden in Kühlkreisläufen eingesetzt. In komplexen Kühlkreisläufen sind häufig mehrere solcher Mehrwegeventile vorhanden.

Der tatsächliche Verschleiß der einzelnen Dehnstoffarbeitselemente in den einzelnen Mehrwegventilen eines Kühlkreislaufes ist in der Praxis oftmals abweichend von den theoretischen Werten für die störungsfreie Einsatzdauer, die von den Herstellern angegeben werden. Bei Wartungsarbeiten an den Kühlkreisläufen ist es schwierig festzustellen, wie der individuelle, tatsächliche Verschleiß des individuellen Dehnstoffarbeitselements im jeweiligen Mehrwegeventil momentan ist. Es ist sowohl ein unterdurchschnittlicher als auch überdurchschnittlicher Verschleiß möglich.

Bei komplexen Kühlkreisläufen gehen die Wartungspläne sicherheitshalber oft von einem überdurchschnittlichen Verschleiß aus und sehen den frühzeitigen Austausch aller Verschleißteile in allen Mehrwegeventilen vor. Dies hat den Nachteil, dass auch bei solchen Mehrwegventilen Verschleißteile ausgetauscht werden, bei denen die Verschleißteile tatsächlich noch nicht die Verschleißgrenze erreicht haben.

Dennoch kann nachteilig der Fall eintreten, dass die tatsächlichen individuellen Betriebsbedingungen eines Mehrwegventils zu einem weit überdurchschnittlichen Verschleiß des Dehnstoffarbeitselements führen können oder das Dehnstoffarbeitselement wegen eines verschleißunabhängigen Defektes ausfällt, wodurch wiederum das Mehrwegeventil ausfällt, noch bevor der Zeitpunkt des planmäßig vorgesehenen Austausches gekommen war. Hierdurch können nachteilig überraschende Störungen und/oder Folgeschäden in dem System entstehen, in dem das Mehrwegeventil eingebaut ist.

Das Dehnstoffarbeitselement ist ein Verschleißteil im Inneren des Ventils, dessen tatsächlicher Verschleißgrad während des laufenden Betriebs bisher nicht festgestellt werden kann. Für eine Diagnose des tatsächlichen Verschleißgrades muss das Ventil geöffnet und das Dehnstoffarbeitselement entnommen werden.

Das Öffnen des Ventils, das Entnehmen und Überprüfen des Dehnstoffarbeitselements sind trotz des abnehmbaren Deckels zeit- und arbeitsintensive Arbeiten. Während dieser Arbeiten ist die Funktion des Ventils nicht mehr vorhanden, daher können diese Arbeiten nicht in einem laufenden System erfolgen, was wiederum Kosten durch Stillstand des Systems verursacht.

Aus dem Stand der Technik ist die DE20120609U1 bekannt. Dieses Dokument beschreibt eine Diagnoseeinrichtung für eine fluidtechnische Einrichtung, beispielsweise eine Ventileinrichtung. Offenbart wird dort einer oder mehrere Sensoren, die dem Ventil zugeordnet sind und Werte liefern. Anhand dieser Werte wird der vermutliche Verschleißgrad des Ventils anhand empirisch ermittelter Vergleichswerte berechnet. Die Berechnung des vermutlichen Verschleißgrades der bekannten fluidtechnischen Einrichtung erfolgt beispielsweise durch eine Zählung von Arbeitszyklen der fluidtechnischen Einrichtung. Die Zählung der Arbeitszyklen allein erlaubt keine ausreichend sichere Aussage über den Verschleiß des Ventils, daher wird vorgeschlagen, noch weitere verschleißrelevante Parameter zu erfassen. Anhand aller erfasster Parameter soll auf statistisch empirischer Basis eine möglichst genaue Aussage über den Verschleiß getroffen werden.

Der Stand der Technik offenbart keine Lehre, den tatsächlichen Verschleißgrad eines Ventils zu ermitteln. Im Stand der Technik fehlt zudem gänzlich der Hinweis auf ein Dehnstoffarbeitselement und die für ein Dehnstoffarbeitselement typischen Probleme. Ein Hinweis eine Temperatur / Bewegungs- Kennlinie als Parameter bei der Berechnung des Verschleißgrades zu berücksichtigen ist im Stand der Technik nicht enthalten.

Es ist Aufgabe der Erfindung ein Verfahren und eine Vorrichtung zur Durchführung des Verfahrens anzugeben, wodurch es möglich ist, den tatsächlichen Verschleiß eines Dehnstoffarbeitselements zu ermitteln, während es sich in einem Mehrwegeventil befindet und ohne das Mehrwegeventil öffnen oder zerlegen zu müssen.

Diese Aufgabe wird gelöst, durch die Merkmale des Anspruches 1. Weitergehende Ausgestaltungen der Erfindung sind Gegenstand der jeweiligen Unteransprüche 2 bis 6.

Weiterer Stand der Technik findet sich in US 2003/125841 A1, DE 10 2011 077901 A1, WO 2013/099386 A1, wobei ein Ventil gemäß Oberbegriff des Patentanspruchs 1 in der Druckschrift DE 10 2011 077901 A1 zu finden ist.

Die Erfindung macht sich hierbei die Erkenntnis zu eigen, dass jede Bewegung des Dehnstoffarbeitselements durch eine Änderung der Temperatur des Dehnstoffarbeitselements verursacht ist. Aufgrund der Wärmeleitung verursacht eine Temperaturänderung des durch das Ventil fließenden Fluids oder Mediums, auch eine Temperaturänderung des Dehnstoffarbeitselements. Die Schlussfolgerung hieraus ist, dass jede Temperaturänderung des Fluids oder Mediums auch eine Bewegung des Dehnstoffarbeitselements verursacht.

Im Betrieb des Mehrwegeventils ergibt sich aus dem permanenten Aufsummieren des Betrags aller Bewegungen ein fortschreitend aktualisierter Wert für ein Streckenmaß. Der Hersteller des Dehnstoffarbeitselements kann das Streckenmaß bis zum Erreichen der Verschleißgrenze relativ genau angeben.

Wie oben beschrieben verursacht jede Temperaturänderung des Fluids oder Mediums -egal ob die Temperatur ansteigt oder wieder sinkt- eine Bewegung des Dehnstoffarbeitselements um eine gewisse Strecke.

Erfindungsgemäß werden zur Ermittlung des genauen Streckenmaßes, die ständigen Temperaturwechsel des Dehnstoffarbeitselements und die für das Dehnstoffarbeitselement gültige Temperatur / Bewegungs- Kennlinie als Datenbasis verwendet.

Die für das Dehnstoffarbeitselement gültige Temperatur / Bewegungs- Kennlinie kann eine Hysterese aufweisen und zur Ermittlung des Streckenmaßes kann erfindungsgemäß auch der Hystereseverlauf berücksichtigt werden, ob der Temperaturwechsel in aufsteigender oder absteigender Richtung erfolgt.

Zusammen mit der Herstellerangabe, welche Gesamtstrecke garantiert wird, ermöglicht der Vergleich des aktuell ermittelten Streckenmaßes mit der garantierten Gesamtstrecke eine Aussage, wie weit das Dehnstoffarbeitselement von der Verschleißgrenze entfernt ist.

Dies erlaubt es vorteilhaft eine auf aktuellen Messwerten und Berechnungen basierte Aussage über den Verschleiß zu treffen. Das erfindungsgemäße Verfahren ist im Vorteil gegenüber dem bekannten Verfahren, dessen Aussagen über Verschleiß auf Einsatzdauer und empirisch ermittelten Werte basiert.

Ein weiterer Vorteil der Erfindung ist es, individuell die Zeitdauer zu messen, die vergangen ist, bis ein bestimmtes Streckenmaß erreicht wurde. Dies erlaubt eine vorausschauende Aussage wie schnell die Verschleißgrenze erreicht werden wird.

Wenn dieses Streckenmaß einen bestimmten Schwellenwert überschritten hat, kann ein Signal generiert werden, welches dann zur Planung von Wartungsarbeiten verwendet werden kann.

Je nach Anwendungsgebiet und / oder Einsatzort des Mehrwegeventils kann der Schwellenwert, ab dem ein Signal zur Planung von Wartungsarbeiten generiert wird individuell festgelegt werden. Beispielweise, wenn sich ein Mehrwegeventil an einem Einsatzort befindet und ein gewisser Zeitaufwand nötig ist, um diesen Einsatzort zu erreichen kann der Schwellwert entsprechend niedriger gesetzt werden.

Ein weiteres Element der Erfindung ist es, den vermutlichen Verschleißgrad nicht anhand der Summe aller über eine Zeitraum betragsmäßig erfassten Bewegungen anzugeben, sondern aufgrund einer aktuellen Messung, die sofort eine Aussage liefert, wie sich das Dehnstoffarbeitselement aktuell verhält.

Zu dem Dehnstoffarbeitselement gibt es eine gültige Temperatur / Bewegungs-Kennlinie, diese kann einem Datenblatt entnommen werden oder erfindungsgemäß durch die Messvorrichtung 8 selbst ermittelt werden.

Durch eine Korrelation des gemessenen Temperaturwertes und der gleichzeitig gemessen Position des Kolbens 2 kann überprüft werden, ob sich das Dehnstoffarbeitselement 3 noch so dehnt und zusammenzieht, wie es der für das Dehnstoffarbeitselement gültigen Temperatur / Bewegungs- Kennlinie entspricht.

Eine Abweichung der gemessenen Position von der Position, die sich aus der Temperatur / Bewegungs- Kennlinie ergeben würde, ist ebenfalls ein Hinweis auf einen Verschleiß. Bei einem schleichenden Verschleiß nimmt die Abweichung im Laufe der Zeit zu.

Damit wird vorteilhaft ein tatsächlich eingetretener Verschleiß erkennbar. Es kann ebenfalls ein Schwellwert definiert werden, welche Abweichung noch tolerierbar ist. Bei einer Abweichung über dem tolerierten Wert hinaus kann ein Signal generiert und/oder eine Wartungsarbeit eingeleitet werden.

Die Ermittlung der für ein Dehnstoffarbeitselement gültigen Temperatur / Bewegungs- Kennlinie kann erfindungsgemäß für jedes Mehrwegeventil mittels der erfindungsgemäßen Sensoren und Auswerteelektronik selbst erfolgen. Dies führt zu noch genaueren Ergebnissen als wenn man eine allgemeine Kennlinie, z.B. aus dem Datenblatt des Herstellers verwendet, da Streuungen ausgeglichen werden können.

Bei der individuellen Kennlinien Erstellung wird bei einem neuen Mehrwegeventil oder nach dem Austausch des Dehnstoffarbeitselements eine Korrelation zwischen Temperatur des Dehnstoffarbeitselements und der Position des Kolbens erfasst und für künftige Berechnungen gespeichert. Zu jedem diskreten Temperaturwert wird eine Position gespeichert. Vorzugsweise werden mehrere Datenpaare über den gesamten zu erwartenden Temperaturbereich erfasst und gespeichert.

Um Hysterese-Effekte zu berücksichtigen ist es erfinderisch vorgesehen, diese Datenpaare zu erfassen, wenn die Temperaturänderung zwischen zwei Datenpaaren ansteigende Tendenz hat und nochmals Datenpaare zu erfassen, wenn die Temperaturänderung absteigende Tendenz hat.

Um die Abweichung der aktuellen Kolbenposition von der gültigen Temperatur / Bewegungs- Kennlinie zu beurteilen, wird daher zusätzlich berücksichtigt, ob die Temperaturänderung eine ansteigende oder absteigende Tendenz hat.

Nachfolgend ist ein mögliches Ausführungsbeispiel der Erfindung anhand einer Figur näher erläutert.

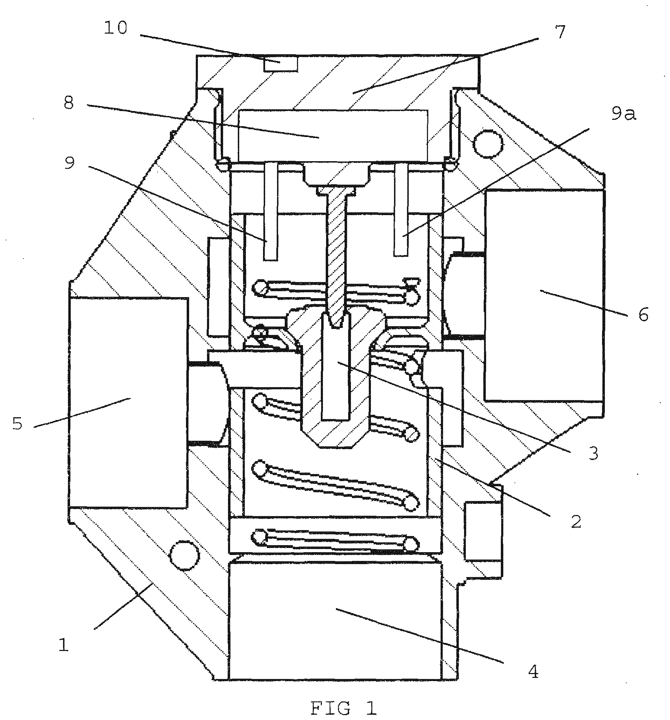

Die Figur 1 zeigt in geschnittener Prinzip- Darstellung das erfindungsgemäße Mehrwegventil 1.

Im Mehrwegeventil 1 ist ein Kolben 2 angeordnet, der mittels eines Dehnstoffarbeitselementes 3 axial bewegbar ist.

Das Mehrwegeventil 1 hat eine Einlassöffnung 4 in welche ein Medium einströmen kann. Je nach Position des Kolbens 2 kann das Medium durch eine der beiden Auslassöffnungen 5 oder 6 ausströmen. Es gibt auch Positionen des Kolbens 2, bei denen das Medium teils aus der Auslassöffnung 5 und teils aus der Auslassöffnung 6 ausströmen kann.

Das Dehnstoffarbeitselement 3 ist ein Verschleißteil und daher hat das Mehrwegeventil 1 einen Deckel 7 über welchen das Dehnstoffarbeitselement 3 gewechselt werden kann. Der Deckel 7 ist zerstörungsfrei abnehmbar.

In diesem Deckel 7 ist erfindungsgemäß eine Messvorrichtung 8 mit Sensoren 9, 9a, einen Indikator 10 und eventuell auch eine Auswerteelektronik und eventuell eine Energiequelle untergebracht.

Die Unterbringung der Messvorrichtung 8, des Positionssensors 9, des Temperatursensors und eventuell weitere Komponenten im Deckel 7 hat den Vorteil, dass ein vorhandenes Mehrwegeventil, bei dem zum routinemäßigen Austausch des Dehnstoffarbeitselements der vorhandene Deckel entfernt wird, schnell und einfach mit der Erfindung nachgerüstet werden kann. Zur Nachrüstung wird anstatt des alten Deckels ein neuer erfindungsgemäßer Deckel 7 angebracht.

Der Deckel 7 hat an seiner Außenseite optional einen optischen Indikator 10, der den aktuellen Verschleißgrad des Dehnstoffarbeitselements 3 anzeigt. Auch ist es möglich einen akustischen Indikator 10 im Deckel 7 unterzubringen. Der Indikator 10 kann Signal abgeben, wenn die Verschleißgrenze des Dehnstoffarbeitselements 3 oder ein noch vor der eigentlichen Verschleißgrenze liegender Schwellwert überschritten ist. Der Indikator 10 ist besonders vorteilhaft in komplexen Kühlkreisläufen, da bei Wartungsarbeiten schnell optisch oder akustisch erkannt werden kann, ob und wenn ja, welches Mehrwegeventil gewartet werden muss. Auch ist es möglich, dass die Messvorrichtung 8 bei einer Abweichung ein Signal abgibt.

Die Messvorrichtung 8 kann außer dem Positionssensor 9 und dem Temperatursensor weitere Sensoren umfassen, beispielsweise einen zweiten Positionssensor 9a oder Drucksensor umfassen.

Der Positionssensor 9 kann die jeweilige axiale Position des Kolbens 2 erfassen. Als Sensorprinzipien sind sowohl berührungslose Sensorprinzipien möglich, etwa induktive bzw. kapazitive, magnetische Positionsmessung, optische Positionsmessung oder Ultraschall Positionsmessung. Auch ist es möglich die Position des Kolbens 2 durch mechanische Kopplung mit einem Potentiometer oder Drehkondensator zu realisieren.

Mit den zwei Positionssensoren 9 und 9a ist es zusätzlich zur axialen Positionsbestimmung des Kolbens 2 auch möglich, ein seitliches Spiel des Kolbens 2 zu erfassen. Ein solches seitliches Spiel des Kolbens 2 führt in den beiden Sensoren 9 und 9a zu einer betragsmäßig gleichen aber hinsichtlich des Vorzeichens unterschiedlichen Änderung des Messwertes. Ein seitliches Spiel des mit dem Dehnstoffarbeitselement 3 verbundenen Kolbens 2 ist ein weiteres Indiz dafür, dass das Dehnstoffarbeitselement 3 einen Verschleiß aufweist.

Der Temperatursensor misst die jeweils aktuelle Temperatur des Mediums im Mehrwegeventil 1. Dieser Temperaturänderung des Mediums folgt mit einer gewissen Verzögerung die Temperatur des Dehnstoffarbeitselements 3 was wiederum zu einer Bewegung des Dehnstoffarbeitselements 3 führt. Bei einer Temperaturerhöhung dehnt sich das Dehnstoffarbeitselement 3 aus, bei einer Temperaturverringerung zieht sich das Dehnstoffarbeitselement 3 zusammen. Der mechanisch mit dem Dehnstoffarbeitselement 3 verbundene Kolben 2 folgt verändert seine Position entsprechend zur Temperaturänderung.

Anhand einer für das Dehnstoffarbeitselement 3 gültigen Temperatur / Bewegungs-Kennlinie kann allein aus den ständigen Temperaturänderungen des Mediums das Dehnen und Zusammenziehen des Dehnstoffarbeitselements 3 ermittelt werden. Aus der Summe aller Dehn- und Zusammenziehbewegungen kann der Verschleißgrad des Dehnstoffarbeitselements 3 berechnet werden.

Die für das Dehnstoffarbeitselement 3 gültige Temperatur / Bewegungs- Kennlinie kann einem Datenblatt entnommen werden oder erfindungsgemäß durch die Messvorrichtung 8 selbst ermittelt werden. Hierzu wird bei einem neuen Ventil oder nach dem Austausch des Dehnstoffarbeitselements eine Korrelation zwischen Temperatur des Dehnstoffarbeitselements und der Position des Kolbens 2 erfasst und für künftige Berechnungen gespeichert. Zu jedem diskreten Temperaturwert wird eine Position gespeichert. Vorzugsweise werden mehrere Datenpaare über den gesamten zu erwartenden Temperaturbereich erfasst und gespeichert.

Um Hysterese-Effekte zu berücksichtigen ist es erfinderisch vorgesehen, diese Datenpaare zu erfassen, wenn die Temperaturänderung zwischen zwei Datenpaaren ansteigende Tendenz hat und nochmals Datenpaare zu erfassen, wenn die Temperaturänderung absteigende Tendenz hat.

Durch eine Korrelation eines gemessenen Temperaturwertes und der gleichzeitig gemessen Position des Kolbens 2 kann überprüft werden, ob sich das Dehnstoffarbeitselement 3 noch so dehnt und zusammenzieht, wie es der für das Dehnstoffarbeitselement gültigen Temperatur / Bewegungs- Kennlinie entspricht.

Eine Abweichung von der Temperatur / Bewegungs- Kennlinie ist ebenfalls ein Hinweis auf einen Verschleiß. Damit wird vorteilhaft ein Verschleiß erkennbar, der tatsächlich schon eingetreten ist und zwar auch bevor die betragsmäßige Summe aller Änderungen den empirisch ermittelten Wert überschritten hat, ab dem das Signal generiert wird, das üblicherweise zur Planung von Wartungsarbeiten verwendet wird.

Das Mehrwegeventil 1 oder einzelne Teile des Mehrwegeventils 1 können auch aus einem nichtmetallischen Material, etwa Kunststoff oder Keramik sein. Wenn beispielsweise der Kolben 2 aus einem nichtmetallischen Material ist, dann wird ein Messverfahren eingesetzt, welches die Bewegung eines nichtmetallischen Materials detektieren kann, beispielsweise mittels eines kapazitives Messverfahrens.

Bei einem Mehrwegeventil 1 dessen Gehäuse aus nichtmetallischem Material ist kann die Messvorrichtung außen am Mehrwegeventil 1 angebracht werden und muss nicht im Deckel 7 untergebracht werden. Das hat den Vorteil, dass die Messvorrichtung bei laufendem Betrieb des Mehrwegeventils nachgerüstet werden kann.

Bei einem Mehrwegeventil aus nichtmetallischem Material kann durch eine geeignete Messvorrichtung auch detektiert werden, ob sich Metallpartikel im Fluid oder Medium befinden.

## Patentansprüche

1. Ventil (1) aufweisend
- eine Vorrichtung zum Ermitteln des Verschleißgrades des Ventils (1), wobei der Verschleißgrad des Ventils (1) vom Verschleißgrad eines innerhalb des Ventils (1) vorhandenen Dehnstoffarbeitselementes (3) abhängt, durch das ein Kolben (2) des Ventils (1) bewegbar ist; wobei
- innerhalb des Ventils (1) ein oder mehrere Sensoren angeordnet sind, die eingerichtet sind, Werte liefern, durch welche der Verschleißgrad des Dehnstoffarbeitselements (3) berechenbar ist, und die Sensoren mit einer Auswerteelektronik verbunden sind; **gekennzeichnet durch**
- einen Deckel (7), der zerstörungsfrei abnehmbar ist und über welchen das Dehnstoffarbeitselement (3) ausgewechselt werden kann, wobei
wenigstens (i) ein Positionssensor und/oder ein Temperatursensor, und (ii) die dazugehörige Auswerteelektronik im Deckel (7) untergebracht sind; wobei
die Auswerteelektronik mit einem optischen oder akustischen Indikator (10) verbunden ist oder einen Signalausgang zur Bereitstellung einer Information bezüglich des Verschleißgrades des Dehnstoffarbeitselementes (3) aufweist.

2. Ventil (1)nach Anspruch 1, wobei
- die Sensoren ein Temperatursensor zum Erfassen der Temperatur des Dehnstoffarbeitselements (3) oder zum Erfassen der Temperatur des durch das Ventil fließenden Fluids, insbesondere des das Dehnstoffarbeitselement (3) umgebenden Fluids, und ein Positionssensor (9) zum Erfassen der Position des mit dem Dehnstoffarbeitselement verbundenen Kolbens (2) sind,
- aus den von den Sensoren gelieferten Werten ermittelbar ist, ob die Position des Kolbens (2) mit der Position übereinstimmt, die zu erwarten ist, wenn man die Position des Kolbens (2) anhand der vom Temperatursensor gemessenen Temperatur und der für das Dehnstoffarbeitselement (3) gültigen Temperatur/Bewegungs-Kennlinie errechnet, und
- eine Abweichung der gemessenen Position von der Position, die sich aus der Temperatur/Bewegungs-Kennlinie ergeben würde, als ein Hinweis auf den Verschleißgrad des Dehnstoffarbeitselementes (3) verwendet wird.

3. Ventil (1)nach Anspruch 1 oder 2, wobei
einer der Sensoren ein Positionssensor (9) ist, durch den die Bewegungen des Dehnstoffarbeitselements (3) oder eines von dem Dehnstoffarbeitselement (3) bewegbaren Teils berührungslos oder durch mechanischen Kontakt erfassbar sind.

4. Ventil (1)nach Anspruch 2 bis 3, wobei
die Abweichung als die Information bezüglich des Verschleißgrades bereitgestellt wird und zur Planung von Wartungsarbeiten verwendet wird.

5. Ventil (1)nach Anspruch 1, wobei
zwei Positionssensoren (9, 9a) vorgesehen sind und durch Auswertung der von den beiden Positionssensoren (9, 9a) gelieferten Signale ein seitliches Spiel des Kolbens (2) im Ventil (1) detektierbar ist.

6. Ventil (1)nach Anspruch 1, wobei
eine Messvorrichtung (8) vorhanden ist, durch welche eine Temperatur/Bewegungs-Kennlinie für das jeweils im Ventil (1) befindliche Dehnstoffarbeitselement (3) erfassbar ist, indem zu mehreren Temperaturwerten die Position des Kolbens (2) gemessen wird und die Datenpaare aus Temperatur und Position speicherbar und für weitere Berechnungen verwendbar sind, wobei die Datenpaare vorzugsweise einmal dann erfasst werden, wenn die Temperaturänderung zwischen zwei Datenpaaren eine ansteigende Tendenz hat und nochmals Datenpaare erfasst werden, wenn die Temperaturänderung zwischen zwei Datenpaaren eine absteigende Tendenz hat.

## Claims

1. A valve (1) comprising
- an apparatus for determining the degree of wear of the valve (1), wherein the degree of wear of the valve (1) depends on the degree of wear of an expandable material operating element (3) present inside the valve, by which a piston (2) of the valve (1) is moveable; wherein
- one or more sensors are arranged inside or outside the valve (1), which deliver values by means of which the degree of wear of the expandable material operating element (3) can be calculated and the sensors are connected to evaluation electronics;
**characterised by**
- a cover (7) which can be removed non-destructively and by means of which the expandable material operating material (3) can be replaced, wherein
at least (i) one position sensor and/or temperature sensor, and (ii) the corresponding evaluation electronics are housed in the cover (7); wherein
the evaluation electronics is connected with an optical or acoustic indicator (10) or comprises an signal output for providing information regarding the degree of wear of the expandable material operating element (3).

2. A valve (1) according to claim 1, wherein
- the sensors are a temperature sensor for detecting the temperature of the expandable material operating element (3) or for detecting the temperature of the fluid flowing through the valve, in particular the fluid surrounding the expandable material operating element (3), and a position sensor (9) for detecting the position of the piston (2) connected to the expandable material operating element,
- it can be determined from the values delivered by the sensors whether the position of the piston (2) corresponds to the position that is to be expected when the position of the piston (2) is calculated on the basis of the temperature measured by the temperature sensor and the temperature/movement curve applicable to the expandable material operating element (3) and
- a deviation of the measured position from the position which would be calculated on the basis of the temperature/movement curve, being used as an indication for the degree of wear of the expandable material operating element (3).

3. A valve (1) according to claim 1 or 2, wherein
one of the sensors is a position sensor (9), by means of which the movements of the expandable material operating element (3) or a part movable by the expandable material operating element (3) can be detected contactless or by mechanical contact.

4. A valve (1) according to claim 2 to 3, wherein
the deviation is provided as information regarding the degree of wear and is used for the planning of maintenance work.

5. A valve (1) according to claim 1, wherein
two position sensors (9, 9a) are provided and a lateral play of the piston (2) in the valve (1) can be detected by evaluation of the signals delivered by the two position sensors (9, 9a).

6. A valve (1) according to claim 1, wherein
a measuring device (8) is present, by means of which a temperature/movement curve for the respective expandable material operating element (3) present in the valve (1) can be recorded, by measuring the position of the piston (2) at a plurality of temperature values and the data pairs comprising temperature and position can be stored and used for further calculations, wherein the data pairs are preferably recorded once when the change in temperature between two data pairs has a rising tendency and data pairs are again recorded when the change in temperature between two data pairs has a falling tendency.

## Revendications

1. Vanne (1) comprenant
- un dispositif pour déterminer le degré d'usure de la vanne (1), dans lequel le degré d'usure de la vanne (1) dépend du degré d'usure d'un élément de travail (3) en matériau d'expansion présent à l'intérieur de la vanne (1), à travers duquel un piston (2) de la vanne (1) est mobile ;
- un ou plusieurs capteurs étant disposés à l'intérieur de la vanne (1), étant aptes à fournir des valeurs au moyen desquelles le degré d'usure de l'élément de travail (3) en matériau d'expansion peut être calculé, les capteurs étant reliés à un système d'évaluation électronique ; **caractérisé par**
- un couvercle (7) qui peut être retiré de manière non destructive et par lequel l'élément de travail (3) en matériau d'expansion peut être remplacé,
au moins (i) un capteur de position et/ou un capteur de température, et (ii) l'électronique d'évaluation associée étant logés dans le couvercle (7) ;
l'électronique d'évaluation étant connectée à un indicateur optique ou acoustique (10) ou disposant d'une sortie de signal pour fournir des informations relatives au degré d'usure de l'élément de travail en matériau d'expansion (3).

2. Vanne (1) selon la revendication 1, dans laquelle
- les capteurs sont un capteur de température pour détecter la température de l'élément de travail en matériau d'expansion (3) ou pour détecter la température du fluide s'écoulant à travers la vanne, en particulier le fluide entourant l'élément de travail en matériau d'expansion (3), et un capteur de position (9) pour détecter la position du piston (2) relié à l'élément de travail en matériau d'expansion,
- il est possible de déterminer à partir des valeurs fournies par les capteurs si la position du piston (2) correspond à la position à laquelle on doit s'attendre si la position du piston (2) est calculée sur la base de la température mesurée par le capteur de température et de la courbe caractéristique température/mouvement qui est valable pour l'élément de travail en matériau d'expansion (3), et
- un écart de la position mesurée par rapport à la position qui résulterait de la courbe caractéristique température/mouvement est utilisé comme indication du degré d'usure de l'élément de travail en matériau d'expansion (3).

3. Vanne (1) selon la revendication 1 ou 2, dans laquelle
l'un des capteurs est un capteur de position (9) au moyen duquel les mouvements de l'élément de travail en matériau d'expansion (3) ou d'une pièce qui peut être déplacée par l'élément de travail en matériau d'expansion (3) peuvent être détectés sans contact ou par contact mécanique.

4. Vanne (1) selon les revendications 2 à 3, dans laquelle
l'écart est fourni en tant qu'information concernant le degré d'usure et sert à planifier les travaux d'entretien.

5. Vanne (1) selon la revendication 1, dans laquelle
deux capteurs de position (9, 9a) sont prévus et un jeu latéral du piston (2) dans la vanne (1) peut être détecté en évaluant les signaux fournis par les deux capteurs de position (9, 9a).

6. Vanne (1) selon la revendication 1, dans laquelle
un dispositif de mesure (8) est prévu, au moyen duquel une courbe caractéristique température/mouvement pour l'élément de travail (3) en matériau d'expansion respectif situé dans la vanne (1) peut être enregistrée, en mesurant la position du piston (2) pour plusieurs valeurs de température et les paires de données de température et de position peuvent être enregistrées et utilisées pour d'autres calculs, les paires de données étant enregistrées de préférence une fois lorsque la variation de température entre deux paires de données a une tendance croissante et les paires de données étant enregistrées à nouveau lorsque la variation de température entre deux paires de données a une tendance décroissante.
